# EUROPEAN PATENT APPLICATION

(11) **EP 2 955 651 A1**
(43) Date of publication of application: **16.12.2015**
(21) Application number: 15171469.8
(22) Date of filing: 10.06.2015
(51) Int. Cl.: G06F 21/10

(54) **METHODS AND SYSTEMS FOR MANAGING LICENSE DISTRIBUTION FOR SOFTWARE**

(30) Priority: 10.06.2014 US 201462010134 P
(71) Applicant: Services Petroliers Schlumberger, 75007 Paris (FR); Logined B.V., 2586 BJ S Gravenhage (NL)
(72) Inventor: Montana, Dave, Houston, TX Texas 77057 (US); Alarcón Ortiz, Juan Carlos, Houston, TX Texas 77055 (US); Toolsi, Reishin, Houston, TX Texas 77057 (US)
(74) Representative: Li, Boxi

(57) **Abstract**

Methods, computing systems, and computer-readable media include software license management. The method includes receiving, from a user, a request to use one or more software applications for a period of time. The one or more software applications are protected by access controls unlocked by one or more hardware dongles. The method also includes configuring, by one or more processors, a virtual machine that executes the one or more software applications for the period of time. The virtual machine is configured to request authorization to unlock the access controls for the one or more software application from a license server coupled to the one or more hardware dongles. The method includes providing, to the user, connection information for communicating with the virtual machine.

## Description

### Cross-Reference To Related Applications

This application claims priority to U.S. Provisional Patent Application Serial No. 62/010,134 filed on June 10, 2014, which is incorporated by reference herein in its entirety.

### Background

Petrotechnical software used in hydrocarbon production often performs complex operations that require dedicated computing and visualization requirements. When the petrotechnical software is offered on a trial basis, the tester may be required to download a software package and install the software package on an assigned corporate computer. While some testers may successfully download and install software, extensive security restrictions may be encountered that prevent the testers from installing software in an effort to minimize the impact of malicious code destined to break the corporate network security.

Because of the petrotechnical software's complex operations, a high value is often associated with the software. In an effort to minimize software piracy, the software may be protected by a license dongle, for example a physical universal serial bus (USB) drive. The license dongle may securely store information that is required to unlock and access the software. The license dongle may be attached to the computer running the application otherwise the application will not run at all.

Distribution of trial software versions associated with a license dongle may be costly and slow. The distribution requires a software company to ship a physical dongle to the tester, then request to provide the dongle ID and generate a license file which then needs to be sent to the tester, and then manually installed and configured. Even though the license dongle may not be an expensive piece of hardware, the logistics involved around procurement, configuration, shipping and tracking license dongles may be very costly and time consuming.

### Summary

Embodiments of the disclosure may provide a method for software license management. The method includes receiving, from a user, a request to use one or more software applications for a period of time. The one or more software applications may be protected by access controls unlocked by one or more hardware dongles. The method also includes configuring, by one or more processors, a virtual machine that executes the one or more software applications for the period of time. The virtual machine may be configured to request authorization to unlock the access controls for the one or more software application from a license server coupled to the one or more hardware dongles. Additionally, the method includes providing the virtual machine to a cloud computing environment for execution in the cloud computing environment and providing, to the user, connection information for communicating with the virtual machine. The method also includes tracking a duration that the virtual machine executes in the cloud computing environment.

In an embodiment, the method further includes determining, based at least partially on the tracking, that the period of time for the one or more software applications has expired, and decommissioning, in response to the period of time having expired, the virtual machine in the cloud computing environment.

In an embodiment, the period of time may be a trial period to test the one or more software applications.

In an embodiment, configuring the virtual machine includes configuring the virtual machine with an address of the license server.

In an embodiment, providing, to the user, connection information for communicating with the virtual machine includes transmitting, to the user, a link that establishes a remote desktop connection to the virtual machine.

In an embodiment, providing, to the user, connection information for communicating with the virtual machine includes transmitting, to the user, a link to download software that establishes an enhanced remote desktop connection to the virtual machine

Embodiments of the disclosure may also include a non-transitory computer-readable medium storing instructions that, when executed by one or more processors of a computing system, cause the computing system to perform operations. The operations include receiving, at a license server from a virtual machine hosted in a cloud computing environment, a request for a license that grants access to one or more software applications of the virtual machine. The operations also include determining, by the license server, that the license is available for the one or more software applications. Additionally, the operations include retrieving a first identification of a hardware dongle from a license file and retrieving a second identification of a hardware dongle from a one or more hardware dongles coupled to the license server. The operations further include determining whether the first identification matches the second identification. The operations also include, in response to determining that the first identification matches the second identification, transmitting, to the virtual machine, an approval to use the license that grants access to the one or more software applications.

In an embodiment, the operations further include receiving, from the virtual machine, a request to establish a secure communication channel with the license server, and establishing the secure communication channel with the virtual machine. The request for the license may be transmitted via the secure communication channel.

In an embodiment, the secure communication channel may be a virtual private network.

In an embodiment, the operations further include receiving, after a predetermined period of time at the license server, a new request for the license that grants access to one or more software applications.

Embodiments of the disclosure may also include a computing system. The computing system may include a server including one or more processors. The one or more processors may be configured to execute instructions to perform a method. The method includes receiving, from a user, a request to use one or more software applications for a period of time. The one or more software applications may be protected by access controls unlocked by one or more hardware dongles. The method also includes configuring a virtual machine that executes the one or more software applications for the period of time. Additionally, the method includes providing the virtual machine to a cloud computing environment for execution in the cloud computing environment, and providing, to the user, connection information for communicating with the virtual machine. The method also includes tracking a duration that the virtual machine executes in the cloud computing environment. The computing system may also include a license server coupled to the one or more hardware dongles and including one or more processors. The one or more processors configured to execute instructions to perform a method. The method includes receiving, the virtual machine hosted in the cloud computing environment, a request for a license that grants access to the one or more software applications of the virtual machine. The method also includes determining that the license is available for the one or more software applications. Additionally, the method includes retrieving a first identification of a hardware dongle from a license file, and retrieving a second identification of a hardware dongle from the one or more hardware dongles. The method further includes determining whether the first identification matches the second identification. The method also includes, in response to determining that the first identification matches the second identification, transmitting, to the virtual machine, an approval to use the license that grants access to the one or more software applications.

### Brief Description of the Drawings

The accompanying drawings, which are incorporated in and constitute a part of this specification, illustrate embodiments of the present teachings and together with the description, serve to explain the principles of the present teachings. In the figures:
Figure 1 illustrates an example of a system that includes various components to provide trial software in a cloud computing environment, according to an embodiment.
Figures 2A and 2B illustrates a flowchart of a method for providing trial software in a cloud computing environment, according to an embodiment.
Figure 3 illustrates a flowchart of a method for providing access to software in a virtual machine, according to an embodiment.
Figure 4 illustrates a schematic view of a computing system, according to an embodiment.

### Detailed Description

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if' may be construed to mean "when" or "upon" or "in response to determining" or "in response to detecting," depending on the context.

Attention is now directed to processing procedures, methods, techniques, and workflows that are in accordance with some embodiments. Some operations in the processing procedures, methods, techniques, and workflows disclosed herein may be combined and/or the order of some operations may be changed.

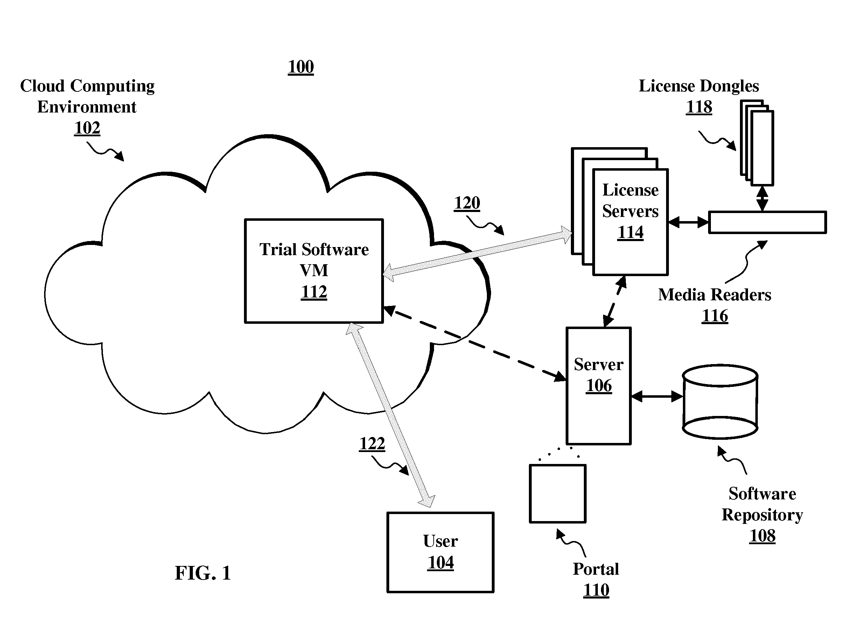

Figure 1 illustrates an example of a system 100 that includes components to provide software on a trial basis in a cloud computing environment 102 to a user 104. In embodiments, the system 100 may provide access to the software, which is protected by access controls such as a hardware dongle, in the cloud computing environment 102.

In embodiments, as used herein, a "cloud computing environment" may include a collection of resources that may be invoked to instantiate a virtual machine, process, or other resource for a limited or defined duration. The cloud computing environment 102 may include hardware resources and software resources configured to deliver computing resources and components needed to instantiate a virtual machine, process, or other resource. For example, in some embodiments, the hardware resources and software resources may host and serve an operating system or components thereof to deliver to and instantiate a virtual machine. In some embodiments, for example, the hardware resources and software resources may accept requests to host computing cycles or processor time, to supply a defined level of processing power for a virtual machine. The cloud computing environment 102 may also include a virtualization manager to manage a virtual machine. The virtualization manager may be a software entity, application, module, application programming interface (API), or any component or combination of hardware resources, that may be configured to build, scale, instantiate, manage, and/or otherwise interface with a network of physical and virtual machines. In some embodiments, the cloud computing environment 102 may include a public cloud computing environment such as AMAZON^{™} elastic cloud. In some embodiments, the cloud computing environment 102 may include a cloud computing environment implemented by a private entity.

In embodiments, the user 104 may be any person, entity, organization, etc. that desires to utilize software for a trial period. The user 104 may utilize one or more computer systems to communicate with and operate in the system 100. In some embodiments, for example, the computer systems may include desktop computers, laptop computers, server computers, smart cellular telephones, tablet computers, and the like.

As illustrated, the system 100 may include a server 106. The server 106 may be configured to offer software for a trial period to the user 104. In embodiments, the software offered by the server 106 may be subject to a software license and protected by access controls to prevent piracy of the software. In some embodiments, the software may be protected by access controls that are unlocked by hardware dongles. In embodiments, the software offered for a trial period may include software utilized in hydrocarbon production. For example, the software may include a simulator such as the ECLIPSE^{™} reservoir simulator (Schlumberger Limited, Houston Texas), the INTERSECT^{™} reservoir simulator (Schlumberger Limited, Houston Texas), PETREL^{®} seismic to simulation software framework (Schlumberger Limited, Houston, Texas), OCEAN^{®} framework environment (Schlumberger Limited, Houston, Texas), etc.

In embodiments, the server 106 may be coupled to a software repository 108. The software repository 108 may include any type of storage devices. For example, in some embodiments, the software repository 108 may include one or more hard disk drives, solid state drives, flash drives, optical drives, and the like. The software repository 108 may store the software that is offered for the trial period.

In embodiments, the server 106 may provide a portal 110. The portal 110 may provide an interface for the user 104 to review and select the software to test during the trial period. In some embodiments, the portal 110 may include one or more web pages. The user 104 may also provide user information via the portal 110. In some embodiments, the user information may include an electronic mail ("email") address, a name, a company name, a login name, and the like.

Once the user 104 selects the software for the trial period, the server 106 may be configured to generate and configure a trial software virtual machine (VM) 112. The trial software VM 112 may include the software selected by the user 104 and any other software necessary to support the software selected by the user 104, for example, operating systems ("OSes"), application programs, and the like. In some embodiments, the server 106 may be configured to generate the trial software VM 112, on demand, from software in the software repository 108, once the user 104 selects the software to be tested. In some embodiments, the server 106 may store, in the software repository 108, pre-generated images or templates of the trial software VM 112 that include the software that is offered on the trial basis.

In some embodiments, as described herein, the trial software VM 112 implementing the software for the trial period may be any software implementation of a machine or computer that may execute a program or application using underlying hardware of the cloud computing environment 102. The trial software VM 112 may be a system virtual machine capable of executing a complete OS or process virtual machine capable of executing one or more programs or applications. It should be appreciated that the number, type, functionality, and extent of each of instantiation of the trial software VM 112 may vary based on the underlying hardware of the cloud computing environment 102, any requirements, or other factors. The server 106 may be configured to instantiate the trial software VM 112. In some embodiment, the server 106 may provide an image of the trial software VM 112 to the cloud computing environment 102 and communicate with the cloud computing environment 102 to instantiate the trial software VM 112.

In embodiments, to unlock access to the software of the trial software VM 112, the trial software VM 112 may be configured to communicate with one or more license servers 114. The license servers 114 may be configured to communicate with the trial software VM 112 to the software in the trial software VM 112. The license servers 114 may be coupled to one or more media readers 116. The media readers 116 may be configured to receive one or more license dongles 118. In some embodiments, the media readers 116 may be coupled to the license server 114 by a wired or wireless connection. In some embodiments, the media readers 116 may be coupled to the license servers 114 by a virtual connect, for example, a virtual private network ("VPN").

In embodiments, the license dongles 118 may be configured to store information that allows usage of the software stored in the software repository 108 and included in the trial software VM 112. The license dongles 118, when attached to a computer or other electronic appliance, may unlock software functionality or decode content of the software. In some embodiments, the license dongles 118 may store credentials, such as identifications (IDs), encryption keys, and like, that unlock the software provided by the server 106 on the trial basis. In some embodiments, the license dongles 118 may be configured to securely store the credentials using hardware or software encryption. In some embodiments, the license dongles 118 may include removable storage devices such as USB memory drives, flash memory devices, SD memory devices, optical disks, and the like. In some embodiments, the media readers 116 may include USB memory readers, flash memory readers, SD memory readers, optical readers, and the like.

In embodiments, the license servers 114 may be configured to store information that allows the license server to communicate with the trial software VM 112 and grant access to the software of the trial software VM 112. The license server 114 may store license files for the software stored in the software repository 108 and included in the trial software VM 112. In some embodiments, the license files may be pre-generated and stored in the license server 114. The license server 114 may utilize the license files to verify that access to the software of the trial software VM 112 can be granted. In some embodiments, for example, the license servers 114 can compare dongle IDs stored in the license files to credentials stored on the licnese dongles 118.

In embodiments, for example, the license server 114 may store a configuration file. The configuration file may enable access to a specific user, project, and/ or group. In this example, the license servers 114 may receive an identification of user, project, or group from the trial software VM 112 in a request for a license. The license servers 114 can retrieve the configuration file and compare the received identification to the configuration file.

In embodiments, once instantiated in the cloud computing environment 102, the trial software VM 112 may be configured to establish a secure communication channel 120. The secure communication channel 120 may be configured to securely transmit messages from the license servers 114 to the trial software VM 112, and vice versa. In some embodiments, the secure communication channel 120 may utilize a secure transport communication protocol ("TCP") or user datagram protocol ("UDP") channel to establish a virtual private network ("VPN") between the trial software VM 112 and the license servers 114. In some embodiments, the secure communication channel 120 may be utilize a proprietary protocol used in license management, such as FLEXlm^{™} protocol.

In embodiments, to establish the secure communication channel 120, the trial software VM 112 may be configured with an address of the license servers 114. Once the trial software VM 112 is instantiated, the trial software VM 112 may be configured to initiate a handshake protocol with the license servers 114 to establish the secure communication channel 120. To seamlessly grant access to the software of the trial software VM 112, the trial software VM 112 may be configured address the secure communication channel 120 as a virtual hardware interface. When the software is executed in the trial software VM 112, the software may make a request for a license to the virtual hardware interface. The request for the license may then be transmitted via the secure communication channel 120 to the license servers 114 to retrieve the approval from the license servers 114. In some embodiments, the trial software VM 112 may include a software application or software module that establishes the secure communication channel 120, and facilitates the communication between the trial software VM 112 and the license servers 114. Accordingly, the software may be unlocked in the trial software VM 112 without the license dongle being directly connected to a physical computer running the software and without the software being modified from it normal operation.

In embodiments, to allow the user to access the trial software VM 112, the server 106 may provide connection information to the user 104. The connection information may be configured to allow the user 104 to establish a communication session 122 with the trial software VM 112. In some embodiments, the communication session 122 may be a remote desktop session between the user 104 and the trial software VM 112. In some embodiments, the server 106 may transmit connection information that establishes a remote desktop protocol (RDP) session between the user 104 and the trial software VM 112. In some embodiments, the server 106 may transmit a link that allows the user to download one or more software application or module (e.g., ThinAnywhere^{™} by Schlumberger Limited, Houston Texas) that establishes an enhanced RDP session between the user 104 and the trial software VM 112. In some embodiments, the server 106 may provide the connection information in an email message, display the access information on the portal 110, and the like.

In embodiments, the server 106 may be configured to monitor the operation of the trial software VM 112 and track the trial period of the trial software VM 112. Once the trial software VM 112 is instantiated, the server 106 may maintain a record that tracks the usage and duration of the trial software VM 112. Once a trial period for the software of the trial software VM 112 has expired, the server 106 may be configured to communicate with the cloud computing environment 102 to decommission the trial software VM 112, e.g., end execution of the trial software VM 112. In some embodiments, the server 106 may communicate with the cloud computing environment 102 to end communication between the trial software VM 112 and the license servers 114.

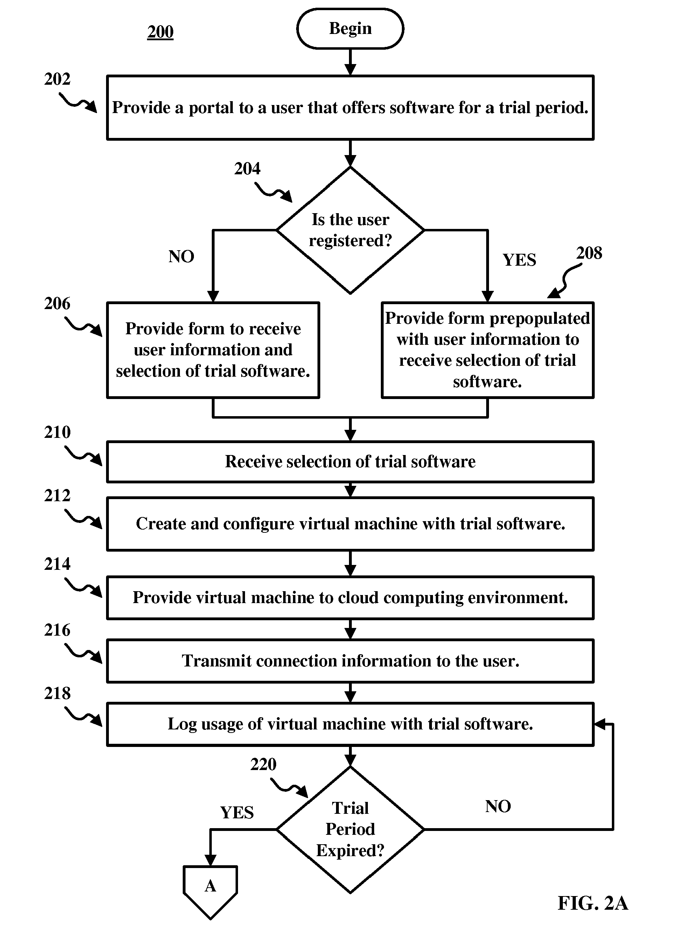

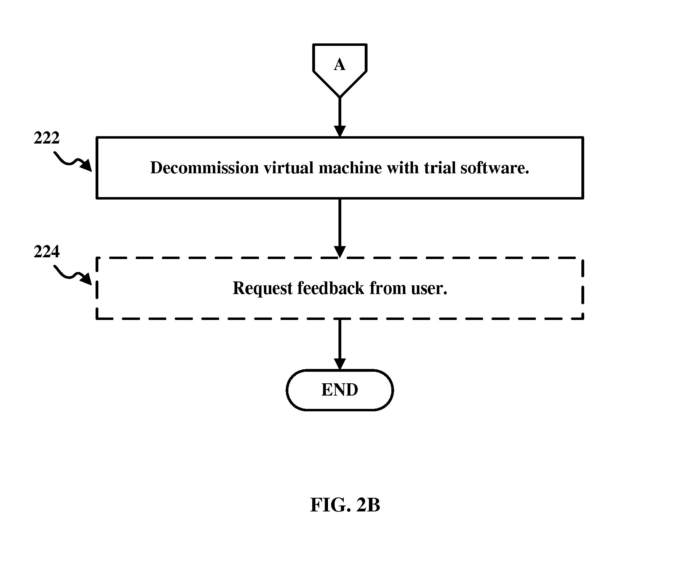

Figure 2 illustrates a flowchart of a method 200 for providing trial software in a cloud computing environment. The method 200 may begin by providing a portal to a user that offers software for a trial period, at 202. In some embodiments, for example, the server 106 may maintain and provide one or more web pages that are accessible to the user 104 over a network. The one or more web pages may display the software available for trial and the trial period available and allow the user 104 to enter information and select the software for testing.

At 204, it may be determined whether the user is registered. In some embodiments, for example, in the portal 110, the user 104 may enter a user name or other information that indicates that the user 104 has previously requested software for trial. At 206, if the user is not registered, a form may be provided to receive user information and selection of trial software. In some embodiments, for example, in a form provided in the portal 110, the user 104 may user information such as name, user name, company, email address, and the like.

At 208, if the user is registered, a form, which is prepopulated with the user information, may be provided to receive selection of trial software. In some embodiments, for example, the server 106 may retrieve information previously entered and populate the form with the previously entered information.

At 210, the selection of the trial software may be received. In some embodiments, for example, in the portal 110, the user 104 may select software to be tested on a trial basis.

At 212, a virtual machine may be created with trial software and configured for use in the cloud computing environment. In some embodiment, for example, based on the trial software selected, the server 106 may retrieve the trial software and any other necessary software from the software repository 108. From the retrieved software, the server 106 may create the trial software VM 112. In some embodiments, for example, based on the trial software selected, the server 106 may retrieve, from the software repository 108, pre-generated images or templates of the trial software VM 112 that include the trial software.

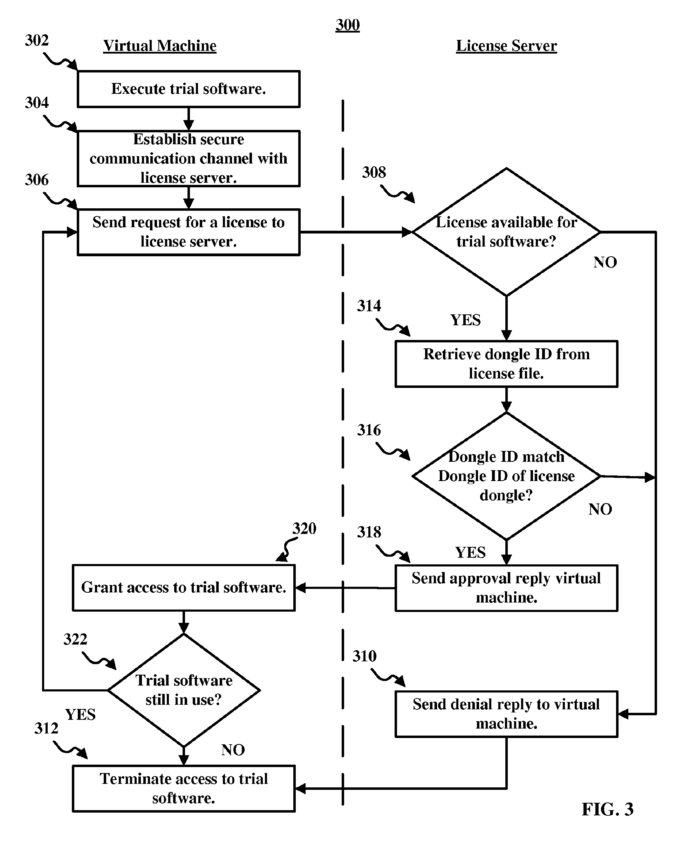

In some embodiments, the virtual machine may be configured to connect to the license servers. In some embodiments, for example, the trial software VM 112 may be configured with an address of the license servers 114. Once the trial software VM 112 is instantiated, the trial software VM 112 may be configured to initiate a handshake protocol with the license servers 114 to establish the secure communication channel 120. The trial software VM 112 may be configured address the secure communication channel 120 as a virtual hardware interface and/or may include a communication application or module. When the software is executed in the trial software VM 112, the software may make a request for a license. In some embodiments, for example, a request for a license may be made as described below in Figure 3.

At 214, the virtual machine may provide to the cloud computing environment. In some embodiments, the server 106 may provide the trial software VM 112 to the cloud computing environment 102 and may communicate with the cloud computing environment 102 to instantiate the trial software VM 112.

At 216, connection information may be transmitted to the user. In some embodiments, for example, the connection information may be configured to allow the user 104 to establish a communication session 122 with the trial software VM 112. In some embodiments, the communication session 122 may be a remote desktop session between the user 104 and the trial software VM 112. In some embodiments, the server 106 may transmit connection information that establishes an RDP session between the user 104 and the trial software VM 112. In some embodiments, the server 106 may transmit a link that allows the user to download one or more software application or module that establishes an enhanced RDP session between the user 104 and the trial software VM 112. In some embodiments, the server 106 may provide the connection information in an email message, display the access information on the portal 110, and the like.

At 218, usage of the virtual machine with trial software may be logged. In some embodiments, for example, the server 106 may be configured to monitor the operation of the trial software VM 112 and track the trial period of the trial software VM 112. Once the trial software VM 112 is instantiated, the server 106 may maintain a record that tracks the usage and duration of the trial software VM 112.

At 220, it may be determined whether the trial period has expired. If the trial period has not expired, the method 200 may return to 218. In some embodiments, for example, if the server 106 determines that the trial period has not expired, the server 106 may take no action and continue to monitor the trial software VM 112.

As illustrated in Figure 2B, if the trial period has expired, the virtual machine with the trial software may be decommissioned, at 222. In some embodiments, for example, once the server 106 determines that the trial period has expired, the server 106 may communicate with the cloud computing environment 102 to decommission the trial software VM 112, e.g., end execution of the trial software VM 112. Once decommissioned, the trial software VM 112 may stop communicating with the license servers 114. In some embodiments, the server 106 may communicate with the cloud computing environment 102 to end communication between the trial software VM 112 and the license servers 114. For example, the server 106 may instruct the cloud computing environment 102 to close one or more firewall rules that allows communication between the trial software VM 112 and the license servers 114 which may prevent access to the license servers 114 once the trial software VM 112 expires.

At 224, optionally, feedback may be requested from the user. In some embodiments, for example, the user 104 may provide, via the portal 110, feedback about the software that was tested or feedback about the testing experience itself.

Figure 3 illustrates a flowchart of a method 300 for providing access to software of a virtual machine using licensing servers. In some embodiments, for example, the method 300 may be performed between the trial software VM 112 and the license server 114.

The method 300 may begin when a virtual machine begins to execute trial software, at 302. In some embodiments, for example, when the user 104 begins execution of the trial software in the trial software VM 112, the trial software may require that a license be available before access to the trial software is granted.

At 304, a secure communication channel may be established between the virtual machine and a license server. In some embodiments, for example, the trial software VM 112 may be configured with an address of the license servers 114. Once the trial software VM 112 is instantiated, the trial software VM 112 may be configured to initiate a handshake protocol with the license servers 114 to establish the secure communication channel 120. The trial software VM 112 may be configured address the secure communication channel 120 as a virtual hardware interface and/or may include a communication application or module.

At 306, a request for a license may be sent to the license server. In some embodiments, for example, when the request is received at the virtual hardware interface, the trial software VM 112 may send the request to the license servers 114 over the secure communication channel 120. In some embodiments, the communication module may send the request to the license server 114.

At 308, it may be determined if a license is available for the trial software. In some embodiments, for example, as different virtual machines request licenses, the license servers 114 check out the licenses (remove the licenses from a pool of available licenses.) If it is determined that a license is not available, a denial reply may be sent, at 310. In some embodiments, for example, the license servers 114 may send the denial reply to the trial software VM 112 via the secure communication channel 120. At 312, access to the trial software can be terminated. In some embodiments, for example, the trial software VM 112 may terminate the access to the trial software.

At 314, if a license is available, a dongle identification (ID) may be retrieved from a license file. In some embodiments, for example, the license server 114 can retrieve a license file corresponding to the trial software. The license servers 114 can access the license file and retrieve the dongle ID.

At 316, it may be determined if the dongle ID from the license file matches a dongle ID of a hardware dongle. In some embodiments, for example, the license servers 114 may access the license dongles 118 using the media readers 116 and retrieve a dongle ID. If the dongle ID from the license file does not match a dongle ID of a hardware dongle, a denial reply may be sent, at 310. In some embodiments, for example, the license servers 114 may send the denial reply to the trial software VM 112 via the secure communication channel 120. At 312, access to the trial software can be terminated. In some embodiments, for example, the trial software VM 112 may terminate the access to the trial software.

At 318, if the dongle ID from the license file does matches a dongle ID of a hardware dongle, an approval reply may be sent. In some embodiments, for example, the license servers 114 may send the approval reply to the trial software VM 112 via the secure communication channel 120. In some embodiments, for example, once approval is granted, the license servers 114 may remove the license that was granted from the pool of available licenses.

At 314-318, a configuration file may also be reviewed to grant or deny access to the trial software. In some embodiments, for example, the configuration file may enables access to a specific user, project, and/ or group. In this example, the license servers 114 may receive an identification of user, project, or group from the trial software VM 112 in the request for a license. The license servers 114 can retrieve the configuration file and compare the received identification to the configuration file. If the identification does not match the configuration file, a denial reply may be sent.

At 320, access to the trial software can be granted. In some embodiments, for example, the trial software VM 112 (or the trial software) may remove access controls to unlock the trial software.

At 322, it can be determined if the trial software is still being used. In some embodiments, for example, the trial software VM 112 (or the trial software) may periodically check to see if the software is still in use. If the software is still in use, the method 300 may recheck to determine if a license is still valid and available for the trial software, for example, repeating 306-320.

In the processes and methods described above, software may be provided on a trial basis and license management may be performed to allow the software to be tested on the trial basis. The embodiments of the present disclosure, however, are not limited to testing software on a trial basis. In embodiments, the processes and methods described above may be used to grant access to software for a period of time whether on a trial basis or in any other situation. In some embodiments, for example, the processes and methods for license management may be preformed on software that is leased or purchased for the period of time.

In the processes and methods described above, access to software application can be provided. The embodiments of the present disclosure, however, are not limited to providing access to a complete software application. In some embodiments, the processes and method described above can be used to provide access to one or more features of a software application. For example, the user 104 may have access to a software application but may require a license to access certain features of the application.

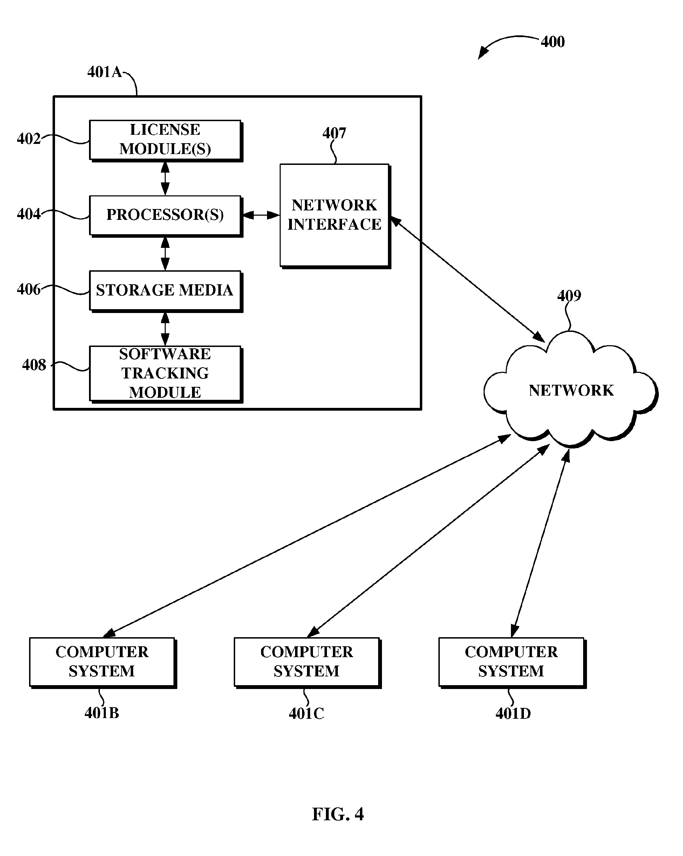

In some embodiments, the methods of the present disclosure may be executed by one or more computing systems. Figure 4 illustrates an example of such a computing system 400, in accordance with some embodiments. The computing system 400 may include a computer or computer system 401A, which may be an individual computer system 401A or an arrangement of distributed computer systems. The computer system 401A includes one or more license modules 402 that are configured to perform various tasks according to some embodiments, such as one or more methods disclosed herein. To perform these various tasks, the license module 402 executes independently, or in coordination with, one or more processors 404, which is (or are) connected to one or more storage media 406. The processor(s) 404 is (or are) also connected to a network interface 407 to allow the computer system 401A to communicate over a data network 409 with one or more additional computer systems and/or computing systems, such as 401B, 401C, and/or 401D (note that computer systems 401B, 401C and/or 401D may or may not share the same architecture as computer system 401A, and may be located in different physical locations, e.g., computer systems 401A and 401B may be located in a processing facility, while in communication with one or more computer systems such as 401C and/or 401D that are located in one or more data centers, and/or located in varying countries on different continents).

A processor may include a microprocessor, microcontroller, processor module or subsystem, programmable integrated circuit, programmable gate array, or another control or computing device.

The storage media 406 may be implemented as one or more computer-readable or machine-readable storage media. Note that while in the example embodiment of Figure 4 storage media 406 is depicted as within computer system 401A, in some embodiments, storage media 406 may be distributed within and/or across multiple internal and/or external enclosures of computing system 401A and/or additional computing systems. Storage media 406 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or alternatively, may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some embodiments, computing system 400 contains software tracking module 408. In the example of computing system 400, computer system 401A includes the software tracking module 408. In some embodiments, a single software tracking module may be used to perform some aspects of one or more embodiments of the methods disclosed herein. In alternate embodiments, a plurality of software tracking module may be used to perform some aspects of methods herein.

It should be appreciated that computing system 400 is merely one example of a computing system, and that computing system 400 may have more or fewer components than shown, may combine additional components not depicted in the example embodiment of Figure 4, and/or computing system 400 may have a different configuration or arrangement of the components depicted in Figure 4. The various components shown in Figure 4 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

The foregoing description, for purpose of explanation, has been described with reference to specific embodiments. However, the illustrative discussions above are not intended to be exhaustive or limiting to the precise forms disclosed. Many modifications and variations are possible in view of the above teachings. Moreover, the order in which the elements of the methods described herein are illustrate and described may be re-arranged, and/or two or more elements may occur simultaneously. The embodiments were chosen and described in order to best explain the principals of the disclosure and its practical applications, to thereby enable others skilled in the art to best utilize the disclosed embodiments and various embodiments with various modifications as are suited to the particular use contemplated.

## Claims

1. A method for software license management, comprising:
receiving, from a user, a request to use one or more software applications for a period of time, wherein the one or more software applications are protected by access controls unlocked by one or more hardware dongles;
configuring, by one or more processors, a virtual machine that executes the one or more software applications for the period of time, wherein the virtual machine is configured to request authorization to unlock the access controls for the one or more software application from a license server coupled to the one or more hardware dongles;
providing the virtual machine to a cloud computing environment for execution in the cloud computing environment;
providing, to the user, connection information for communicating with the virtual machine; and
tracking a duration that the virtual machine executes in the cloud computing environment.

2. The method of claim 1, the method further comprising:
determining, based at least partially on the tracking, that the period of time for the one or more software applications has expired; and
decommissioning, in response to the period of time having expired, the virtual machine in the cloud computing environment.

3. The method of claim 1, the method further comprising:
providing, to the user, a portal for receiving the request from the user.

4. The method of any of claims 1-3, wherein providing, to the user, connection information for communicating with the virtual machine, comprises:
transmitting, to the user, a link that establishes a remote desktop connection to the virtual machine.

5. The method of any of claims 1-3, wherein providing, to the user, connection information for communicating with the virtual machine, comprises:
transmitting, to the user, a link to download software that establishes an enhanced remote desktop connection to the virtual machine.

6. The method of any of the preceding claims, wherein configuring the virtual machine comprises:
configuring the virtual machine with an address of the license server.

7. The method of any of the preceding claims, wherein the period of time is a trial period to test the one or more software applications.

8. A non-transitory computer-readable medium storing instructions that, when executed by one or more processors of a computing system, cause the computing system to perform operations, the operations comprising:
receiving, at a license server from a virtual machine hosted in a cloud computing environment, a request for a license that grants access to one or more software applications of the virtual machine;
determining, by the license server, that the license is available for the one or more software applications;
retrieving a first identification of a hardware dongle from a license file;
retrieving a second identification of a hardware dongle from a one or more hardware dongles coupled to the license server;
determining whether the first identification matches the second identification; and
in response to determining that the first identification matches the second identification, transmitting, to the virtual machine, an approval to use the license that grants access to the one or more software applications.

9. The non-transitory computer-readable medium of claim 8, the operations further comprising:
receiving, from the virtual machine, a request to establish a secure communication channel with the license server; and
establishing the secure communication channel with the virtual machine, wherein the request for the license is transmitted via the secure communication channel.

10. The non-transitory computer-readable medium of any of claims 8 and 9, the operations further comprising:
receiving, after a predetermined period of time at the license server, a new request for the license that grants access to one or more software applications.

11. The non-transitory computer-readable medium of any of claims 8-10, wherein the secure communication channel is a virtual private network.

12. A computing system, comprising:
a server comprising one or more processors, the one or more processors configured to execute instructions to perform a method comprising:
receiving, from a user, a request to use one or more software applications for a period of time, wherein the one or more software applications are protected by access controls unlocked by one or more hardware dongles,
configuring a virtual machine that executes the one or more software applications for the period of time,
providing the virtual machine to a cloud computing environment for execution in the cloud computing environment,
providing, to the user, connection information for communicating with the virtual machine, and
tracking a duration that the virtual machine executes in the cloud computing environment; and
a license server coupled to the one or more hardware dongles and comprising one or more processors, the one or more processors configured to execute instructions to perform a method comprising:
receiving, the virtual machine hosted in the cloud computing environment, a request for a license that grants access to the one or more software applications of the virtual machine,
determining that the license is available for the one or more software applications,
retrieving a first identification of a hardware dongle from a license file,
retrieving a second identification of a hardware dongle from the one or more hardware dongles,
determining whether the first identification matches the second identification, and
in response to determining that the first identification matches the second identification, transmitting, to the virtual machine, an approval to use the license that grants access to the one or more software applications.

13. The system of claim 12, wherein the method performed by the one or more processors of the server further comprises:
determining, based at least partially on the tracking, that the period of time for the one or more software applications has expired; and
decommissioning, in response to the period of time having expired, the virtual machine in the cloud computing environment.

14. The system of claim 12, wherein the method performed by the one or more processors of the license server further comprises:
receiving, from the virtual machine, a request to establish a secure communication channel with the license server; and
establishing the secure communication channel with the virtual machine, wherein the request for the license is transmitted via the secure communication channel.

15. The system of any of claims 12-14, wherein configuring the virtual machine comprises:
configuring the virtual machine with an address of the license server.
